Europäisches Patentamt

(19) European Patent Office

Office européen des brevets

(11) Publication number: **0 072 610**

**A2**

(12) **EUROPEAN PATENT APPLICATION**

(21) Application number: **82303234.7**

(22) Date of filing: **22.06.82**

(51) Int. Cl.³: **B 23 D 47/12**
**B 27 B 5/38**

(30) Priority: **22.06.81 US 275972**

(43) Date of publication of application:
**23.02.83 Bulletin 83/8**

(84) Designated Contracting States:
**CH DE FR GB IT LI NL**

(71) Applicant: **SKIL CORPORATION**
**4801 West Peterson Avenue**
**Chicago Illinois 60646(US)**

(72) Inventor: **Vassos, Louis J.**
**14 Glenlake Avenue**
**Park Ridge Illinois 60068(US)**

(74) Representative: **Fisher, Bernard et al,**
**Raworth, Moss & Cook 36 Sydenham Road**
**Croydon Surrey CR0 2EF(GB)**

(54) **Integral brake and decoupling mechanism.**

㊻ An integral brake and decoupling mechanism, which is particularly although not exclusively suitable for use with a hand-held power saw, includes a drive shaft coupled to the motor of the saw and disposed adjacent to the drive shaft. First and second cylindrical surfaces on the drive shaft and drive cylinder, respectively, are engaged by a coil spring which functions to transfer torque from the drive cylinder to the drive shaft. The coil spring, drive cylinder and drive shaft rotate in unison during the transfer of torque from the motor to the blade. A mechanism is provided for selectively stopping rotation of the coil spring thereby decoupling the drive shaft from applied torque. A detecting mechanism is provided for sensing an abrupt movement of the saw for activating the stopping mechanism. Upon decoupling, overriding torque generated by the coil spring rapidly arrests rotation of the saw blade.

FIG. 1.

Title: "INTEGRAL BRAKE AND DECOUPLING
MECHANISM"

This invention relates generally to the field of
power driven devices having a tool mechanism driven by
a power source.  More specifically, the invention is
particularly, although not exclusively, suitable for
use in hand-held power saws in which an operator can
be injured in the event the lower blade guard is
restrained from closing over the blade.

Circular saws are normally designed to be utilized
by an operator grasping a handle portion of the housing
which contains a trigger mechanism to control an
electric motor.  Should the primary  blade safety device
(lower guard) be restrained after the blade exits a
workpiece, there will be no shield between the operator
and the revolving blade.  Should the operator allow the
revolving blade to come in contact with his body, serious
personal injury could result.

Thus, it is desirable to provice a power saw which
will automatically stop the rotation of the blade after
it exists from a workpiece.  One problem associated
with stopping the blade has been the significant amount
of energy that had to be dissipated by the brake as
heat due to the inertia of the blade, drive shaft, gears,
and armature · of the motor.  In a typical construction,
the rotational energy, i.e. inertia, stored in the
armature of the motor and drive elements (gears) is
greater than the inertia of the drive shaft and blade.
Automatically decoupling the blade and drive shaft
from the drive gears and armature would significantly
reduce the amount of energy dissipated by a brake.
This would reduce the braking force required thereby
permitting the utilization of a brake of lesser capacity
and improving the life and reliability of the components
involved.

To minimize the time it takes to stop the rotation of the blade, initiation of such decoupling concurrently with the application of the brake should occur automatically. Thus it would be highly advantageous to provide an integral decoupling and braking mechanism which would act simultaneously.

It is a general object of the present invention to provide an inegral brake and decoupling mechanism suitable for use in a power driven device having a tool mechanism, e.g./a circular saw driven by a power source.

It is also an object of the invention to provide a means responsive to the acceleration of such a tool mechanism or saw for detecting an abrupt movement of the housing.

A more specific object of the invention is to provide a coil spring decoupling mechanism for preventing the transmission of torque from the motor and associated gears to the blade of a saw when the trigger is released or the above described movement occurs.

A still further object of the invention is to provide a coil spring decoupling mechanism which, in addition to the function described above, will also act as a brake for stopping the rotating blade.

Broadly stated, the present invention provides a power driven device of the type including a housing, a power source, and a tool mechanism driven by the power source, the improvement in an integral brake and clutch comprising

    (a) a drive shaft operatively connected to said tool mechanism;

    (b) a drive cylinder mounted adjacent said drive shaft in co-axial relationship therewith and coupled to an output member of said power source;

- 2 -

0072610

(c) a first cylindrical surface on said drive shaft;

(d) a second cylindrical surface on said drive cylinder adjacent said first surface;

(e) a torque transmission element defined by a coiled spring having an axis common with the axis of said drive shaft and disposed to engage simultaneously said first and second surfaces, said coil spring dimensioned to exert a substantial predetermined force against the first and second surfaces, said coil spring being helically oriented such that the force the latter exerts on said first and second surfaces increases when torque is coupled by the drive cyliner to said spring whereby said spring, drive cylinder, and drive shaft rotate in unison; and

(f) means for selectively stopping the rotation of said spring to prevent torque from being coupled from said drive cylinder to said drive shaft, the friction resulting from said predetermined force between the stationary spring and the rotating drive shaft operating as a brake to stop the rotation of the drive shaft.

More specifically, the present invention provides a hand-held power saw of the type including a housing, a power source, and a blade means driven by the power source for sawing a workpiece, the improvement in an integral brake and clutch comprising:

(a) a drive shaft operatively connected to said blade means;

(b) a drive cylinder mounted adjacent said drive shaft in co-axial relationship therewith and coupled to the output member of said power source;

(c) a first cylindrical surface on said drive shaft;

(d) a second cylindrical surface on said drive cylinder adjacent said first surface;

- 3 -

(e) a torque transmission element defined by a coil spring having an axis common with the axis of said drive shaft and disposed to engage simultaneously said first and second surfaces, said coil spring dimensioned to exert a substantial predetermined force against the first and second surfaces, said coil spring being helically oriented such that the force the latter exerts on said first and second surfaces increases when torque is coupled by the drive cylinder to said spring whereby said spring, drive cylinder, and drive shaft rotate in unison; and

(f) means for selectively stopping the rotation of said spring to prevent torque from being coupled from said drive cylinder to said drive shaft, the friction resulting from said predetermined force between the stationary spring and the rotating drive shaft operating as a brake to stop the rotation of the blade means.

A preferred embodiment of the invention is especially adapted for use with a circular saw which typically includes a housing, a motor, a manually operable switch for controlling the motor, and a drive shaft having a blade mounted thereto. The integral brake and decoupling (clutch) mechanism which is a significant apparatus aspect of this invention, includes a tubular drive cylinder disposed concentric with and adjacent to the drive shaft. This drive cylinder is driven by the motor by means of gears. A torque transmission element defined by a coil spring transfers torque from the drive cylinder to the shaft. The axis of the spring is concurrent with the axis of the shaft. The spring is disposed so that its periphery continuously engages a first cylindrical surface on the drive shaft and a second cylindrical surface on the drive cylinder. The coil spring is dimensioned to exert a

- 4 -

substantial predetermined force against these surfaces when no torque is being transmitted. The spring is helically oriented such that the force it exerts on the drive shaft and drive cylinder increases with applied torque thereby locking the drive shaft and drive cylinder to the spring which rotates therewith during operation.

An acceleration detecting means senses an abrupt movement of the housing. The brake and decoupling mechanism, which is responsive to the release of the trigger and/or acceleration detecting means, stops the rotation of the coil spring preventing torque from being coupled to the drive shaft when the trigger is released and/or this movement sensed. The friction between the spring and drive shaft operates as a brake to stop the rotation of the blade.

Embodiments of the invention will now be described by way of example, reference being made to the accompanying drawings in which:-

Figure 1 is an elevational view of a typical circular saw embodying the concept of the present invention,

Figure 2 is a diagrammatic view primarily illustrating an embodiment of an acceleration detecting mechanism,

Figure 3 is an end view of the preferred embodiment of a brake and decoupling mechanism of the present invention,

Figure 4 is a cross-sectional view taken about line 4-4 of Figure 3,

Figure 5 is an end view of an alternative embodiment of a brake and decoupling mechanism, and

Figure 6 is a cross-sectional view taken about line 6-6 in Figure 5.

Although the embodiments of the present invention are hereinafter described in connection with a hand-held portable circular saw, it will be apparent to those skilled in the art that the invention has application to other motor driven devices and types of saws, such as a chain saw.

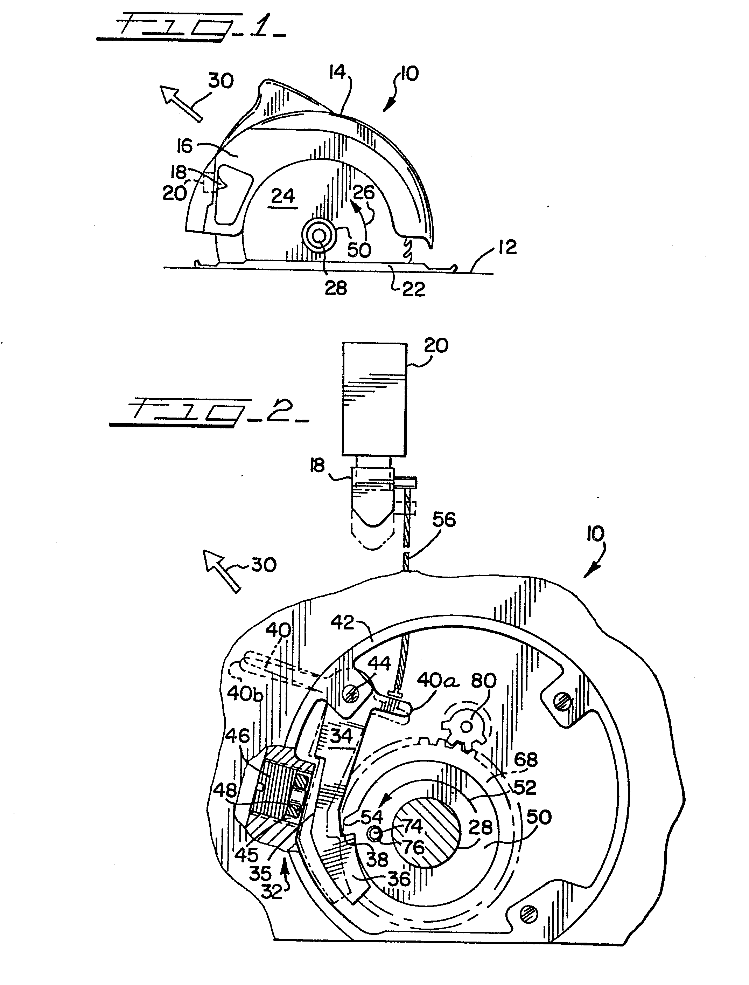

By way of background for the improvement aspects of this invention, Figure 1 illustrates a circular saw 10 in engagement with a workpiece 12. This saw includes a housing 14, and a handle portion 16 having a trigger 18 connected to a manually operable switch mechanism 20 for controlling the motor (not shown). The housing also includes a guide member or base plate 22 for controlling the position of blade 24 relative to the workpiece 12. The blade is connected to drive shaft 28 and is rotated in a direction as indicated by arrow 26.

As seen in Figure 1, an operator would normally cause the saw to move in a left to right direction along workpiece 12. Should the blade encounter an obstruction or an extreme increase in resistance, the forces resulting therefrom would cause the saw 10 to be propelled generally away from the workpiece and towards the operator as indicated by arrow 30.

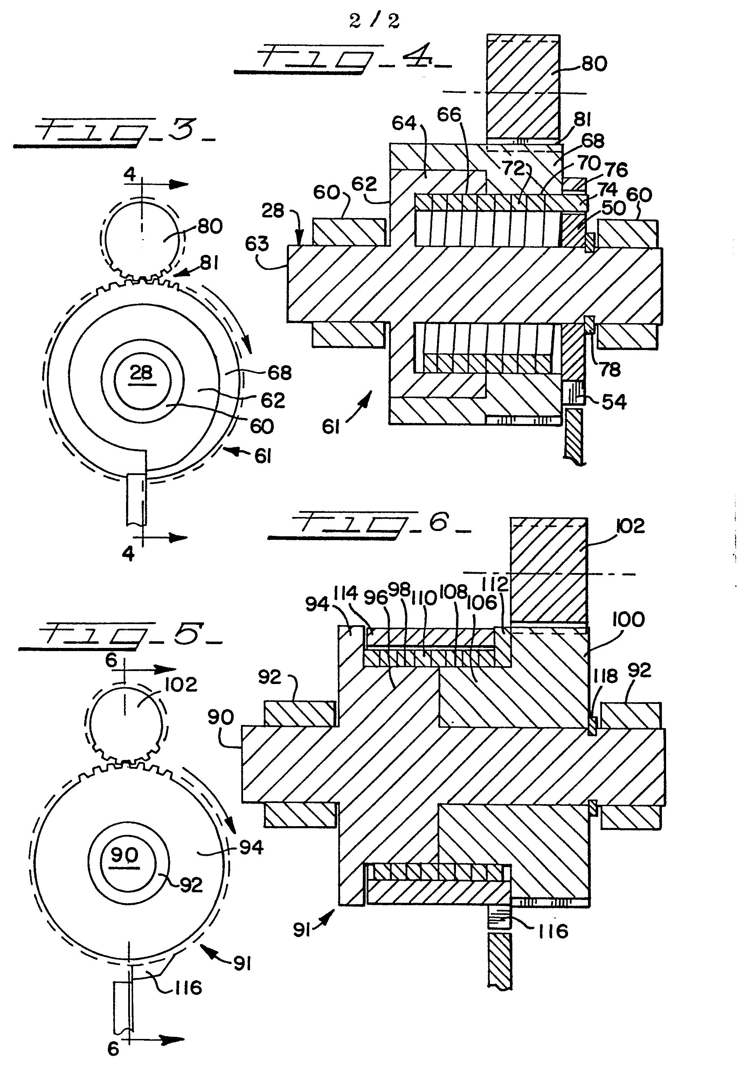

Now referring in particular to Figure 2, an acceleration or inertia detecting means 32 includes a first arm 36 which is contoured to define a pawl 38 and a second arm 40 which extends substantially transverse of the first arm. These first and second arms define a bell crank 34. One end of the first arm is pivotally mounted to housing member 42 about pivot point 44. An aperture 45 in the housing is dimensioned to threadedly receive an insert 46. This insert mounts a ring magnet 48 attached thereto by conventional means. A slot for a screwdriver is provided in the outer end of insert 46 to allow its position to be adjusted.

-6-

Preferably, the insert is made from a non-magnetic material, such as a plastic.

The purpose of magnet 44 is to provide sufficient force, during normal operation of the saw, to maintain first arm 36 of the bell crank adjacent the magnet as indicated by the phantom position of the bell crank. At least a portion 35 of the first arm must be either made of or carry a material which can be attracted to magnet 44.

In the event of an abrupt movement of the housing, bell crank 34 will pivot counterclockwise about point 44 to assume the position as indicated by the solid line representation of the bell crank. Note that Figure 2 diagrammatically illustrates the circular saw 10 in a generally horizontal orientation as shown in Figure 1. When said movement occurs, blade 24, shaft 28 and a collar 50 will be rotating counterclockwise as indicated by arrow 26 in Figure 1 and arrow 52 in Figure 2. Thus, pawl 38 of the first arm 36 will engage tooth (abutment member) 54 located on the perimeter of collar 50 to stop the rotation of the collar upon the detection of said movement. Stopping the rotation of collar 50 decouples the drive shaft 28 from the motor and initiates a braking action to stop the drive shaft and blade; how these results are achieved is described in detail below with reference to Figures 3-6.

The bell crank preferably is reset to its operative position, as indicated in phantom lines in Figure 2, by allowing spring-loaded trigger 18 to return to an extended or off position. A conventional control cable 56 carries a slidable internal wire having one end connected to trigger 18 and the other end disposed adjacent to end 40a of second arm 40 of bell crank 34. When trigger 18 is retracted, as shown in solid lines, to activate the motor, the inner wire cable 56 is positioned to allow clearance with respect to short arm 40 permitting the bell crank to pivot from its operative position to an acceleration detecting position. Upon the release of trigger 18, the inner wire of cable 56 engages end 40a of arm 40 to force the bell crank clockwise from the acceleration detecting position (if a movement had been detected) to its operative position thereby providing an automatic resetting function. The other end 40b of the second arm of the bell crank may extend outwardly and be accessible for manual resetting.

The sensitivity of the acceleration detecting means 32 is dependent upon a number of factors including the shape, mass, pivot point location, and center of gravity of the bell crank, and by the magnitude of the magnetic attraction between magnet 44 and the bell crank. The magnitude of this magnetic attraction can be selectively varied by the positioning of insert 46.

Figures 3 and 4 illustrate the preferred embodiment of the combined decoupling (or clutching) and braking mechanism 61. Drive shaft 28 is mounted for rotation by bearings 60. An annular wall 64, which is preferably an integral portion of the drive shaft, is concentric about the axis of the drive shaft and defines a continuous interior cylindrical surface 66. The wall 64 is attached to the central portion 63 of the drive shaft by a disc-shaped flange portion 62. A drive cylinder 68 is disposed coaxially about the drive shaft and adjacent wall 64. Cylinder 68 defines a continuous interior cylindrical wall 70 preferably having a radius equal to the radius of cylindrical surface 66. Surfaces 66 and 70 define a tubular chamber into which coil spring 72, also known as a wrapped spring, is positioned. The coil spring is preferably selected to have a diameter larger than that of the tubular chamber such that the spring is "squeezed" by surfaces 66 and 70.   The difference in diameters results
in what is commonly referred to as "diametral squeeze".

A small length of end 74 of coil spring 72 is bent
parallel to the axis of the drive shaft.   A retaining
collar 50 receives end 74 of the coil spring through a
hole 76 in the collar.   This collar is held in position
by a snap ring 78.   Retaining collar 50 and drive cylinder
68 would be free to rotate about the drive shaft if coil
spring 72 were not present.

The drive shaft of the motor is coupled by gear 80 to
drive cylinder 68 by means of conventional gear teeth 81.
A cutting blade 24, as shown in Figure 1, is attached by
conventional means to the central portion 63 of the drive
shaft.

The mechanism as shown in Figures 3 and 4 functions as
a "one-way clutch" to couple torque from the drive cylinder
68 to the drive shaft 28.   When operating as a clutch, drive
cylinder 68 rotates clockwise as shown in Figure 3.   For
this direction of rotation, right-hand helical orientation of
the coil spring is used.   As the drive cylinder is rotated,
the friction between the external surfaces of the coil spring
in contact with cylindrical surface 70 causes the spring to
tend to expand thereby increasing the force of the spring on
surfaces 66 and 70.   The coil spring produces a radially
outward force against cylindrical surfaces 66 and 70 to lock
the drive shaft 28 and the drive cylinder 68 to the spring.
While torque is being transmitted from the motor to the
blade,the drive shaft, drive cylinder, coil spring, and
retaining collar rotate in unison.

Thus the coil spring functions as a clutch element to
provide a torque transmission link from the drive cylinder
to the shaft.   The spring is preferably constructed from a
wire having at least one planar outer face and wound such that the planar face will engage surfaces 66 and 70 thereby increasing the contacting surface area of the spring. However, the spring could be formed from a wire not having such a planar face.

The preferred embodiment of the decoupling and braking mechanism 61 also functions as a brake to stop the blade in the event of an abrupt movement of the housing. During operation of the saw the trigger 18 will be retracted to apply power to the saw as the latter engages a workpiece. Thus the end of wire 56 will be spaced from arm 40a. Assume a movement occurs causing the saw to move abruptly in the direction indicated by arrow 30 in Figures 1 and 2. The bell crank 34 of acceleration detecting means 32 pivots counterclockwise causing pawl 38 to engage tooth 54 of the retaining collar 50. Upon this engagement,rotating collar 50 is substantially instantaneously stopped which then causes the coil spring to cease rotation since the tab end 74 of the spring is secured to the collar. This causes cylindrical surface 70 of the drive cylinder to slip about the coil spring thereby decoupling torque transmission from the motor to the shaft even though the motor may still be powered. Simultaneously, the friction between the coil spring and cylindrical surface 66 produces a braking action on the shaft to stop rotation of the blade.

Figures 5 and 6 illustrate an alternative embodiment of an integral clutch and brake mechanism 91 utilizing a coil spring as the torque transmission element. A drive shaft 90 is rotatably held by bearings 92. A portion of the drive shaft accepts a saw blade secured thereto by conventional means. The drive shaft includes extended diameter section 94 and a second extended diameter section 96 having an exterior cylindrical surface 98. A drive cylinder 100,which is driven by a motor via gear 102, is mounted axially about shaft 90.  A reduced diameter portion 106 of the drive cylinder includes an exterior cylindrical surface 108 which is adjacent to cylindrical surface 98.

A coil spring 110 axially engages cylindrical surfaces 98 and 108 and includes an end portion 112 which projects radially outward.  The spring coil 110 is preferably selected to have an interior diameter slightly less than the increased diameter portion 96 of the shaft.  When the coil spring is placed in operative engagement as shown in Figure 6, it will exert a substantial predetermined force against cylindrical surfaces 98 and 108.

A tubular retaining collar 114 is disposed axially adjacent the coil spring and includes an aperture for receiving the end portion 112 of the coil spring.  This retaining collar also includes a tooth 116 disposed to project radially outwardly for engagement with a pawl such as is provided by the acceleration detecting means 32 as illustrated in Figure 2.  A snap ring 118 serves to locate drive cylinder 100 laterally with respect to shaft 90.

Alternative embodiment 91 could be described, with respect to the preferred embodiment 61 shown in Figure 4, as an inverted design.  In the alternative embodiment, the drive train from the motor is coupled to the blade via cylindrical collar 100, coil spring 110, and drive shaft 90. The coil spring 110 serves as the torque transmission element linking the drive cylinder to the shaft.  During the transmission of torque,the drive cylinder, coil spring, retaining collar and shaft rotate in unison. In the event of an abrupt movement of the housing, pawl 38 (note Figure 2) engages tooth 116 to stop the rotation of retaining collar

0072610

114 thereby stopping the rotation of coil spring 110 which substantially instantaneously decouples the shaft from the applied driving torque. The friction between the coil spring and cylindrical surface 98 of the shaft serves as a brake to stop the rotation of the shaft and the blade attached thereto.

An important aspect of the present invention is that the coil spring be selected to provide a high overriding torque. Overriding torque is defined herein as the torque (frictional force) between the coil spring and a surface in contact therewith when such surface rotates relative to the spring in a direction that loosens the grip of the spring. For example, in the preferred embodiment 61 overriding torque exists between coil spring 72 and surface 66 of annular wall 64 of the drive shaft when the drive shaft rotates clockwise (note Figure 3) relative to the spring. This would occur upon the detection of a movement by the accleration detecting means 32 wherein the rotation of the spring would be stopped and the shaft (and blade) would continue to rotate due to inertia. The greater the overriding torque between the coil spring and the surface of the shaft in contact with the spring, the greater the braking action achieved. Therefore, the mechanisms embodying the present invention are dimensioned to provide a high overriding torque in order to stop the rotation of the blade quickly.

An additional benefit derived from the present invention is that since the drive cylinder, gears and motor armature are immediately decoupled from the drive shaft upon the sensing of a movement, the brake need dissipate less energy and provide less braking torque in order to stop the blade in a given amount of time than would be the case if such decoupling had not occurred. For example, in order to stop the blade in

-12-

0.5 second from a no-load speed in a typical circular saw without the mechanism of the present invention, approximately 6.6 Newton meters of braking torque would be required and 900 joules of energy would have to be dissipated.    To achieve a similar result with the preferred embodiment of the present invention, a braking torque of only 1.0 Newton meter would be required and only 140 joules of energy would have to be dissipated.    This illustrative comparison demonstrates the substantial advantage achieved by the present invention.

Another advantage of this invention is that simultaneously with decoupling the inertia associated with the motor and gears, a braking action is applied to stop the rotation of the blade.    Hence, there is no significant time delay between decoupling and the application of the braking force upon the detection of an abrupt movement of the housing.

In light of this disclosure, various modifications and changes to the particular embodiments of the present invention described and illustrated in this specification may be made by those skilled in the art without departing from the spirit of the present invention particularly as defined by the claims appended hereto.

CLAIMS

1.  In a hand-held power saw of the type including a housing, a power source, and a blade means driven by the power source for sawing a workpiece, the improvement in an integral brake and clutch comprising:

(a)  a drive shaft operatively connected to said blade means;

(b)  a drive cylinder mounted adjacent said drive shaft in co-axial relationship therewith and coupled to the output member of said power source;

(c)  a first cylindrical surface on said drive shaft;

(d)  a second cylindrical surface on said drive cylinder adjacent said first surface;

(e)  a torque transmission element defined by a coil spring having an axis common with the axis of said drive shaft and disposed to engage simultaneously said first and second surfaces, said coil spring dimensioned to exert a substantial predetermined force against the first and second surfaces, said coil spring being helically oriented such that the force the latter exerts on said first and second surfaces increases when torque is coupled by the drive cylinder to said spring whereby said spring, drive cylinder, and drive shaft rotate in unison; and

(f)  means for selectively stopping the rotation of said spring to prevent torque from being coupled from said drive cylinder to said drive shaft, the friction resulting from said predetermined force between the stationary spring and the rotating drive shaft operating as a brake to stop the rotation of the blade means.

2. The apparatus according to claim 1 further comprising a detecting means carried by said housing for sensing a sudden acceleration of said housing in a direction generally away from the workpiece, said detecting means, upon sensing said sudden acceleration, causing said stopping means to stop the rotation of said blade means.

3. The apparatus according to claim 2 wherein said detecting means includes a pawl means for engaging said stopping means in response to said sudden acceleration, said pawl means upon engaging said stopping means causing the latter to stop the rotation of said coil spring.

4. The apparatus according to claim 3 wherein said stopping means comprises a collar connected to said coil spring for rotation therewith.

5. The apparatus according to claim 4 wherein said collar includes an outwardly projecting abutment member, said pawl means engaging said abutment member in response to said detecting means sensing said sudden acceleration.

6. The apparatus according to claim 4 wherein one end of said coil spring defines a tab disposed parallel to the axis of said coil spring, and said collar including a means for receiving said tab so that the collar and coil spring can not rotate relative to each other.

7. The apparatus according to claim 2 wherein said stopping means substantially instantaneously stops the rotation of said spring in response to said detecting means sensing said sudden acceleration.

8. The apparatus according to claim 1 wherein said first cylindrical surface is defined by a separate annular wall coaxial to said drive shaft and integral with said drive shaft.

9. The apparatus according to claim 2 wherein said detecting means comprises a first arm pivotally mounted at one end thereof to said housing, said first arm disposed with its other end adjacent said stopping means.

10. The apparatus according to claim 9 wherein said detecting means further comprises a magnetic means carried by said housing for continuously exerting a force on said first arm, said first arm disposed between said magnetic means and said stopping means whereby the force exerted upon said first arm by said magnetic means tends to attract the first arm away from the stopping means.

11. The apparatus according to claim 10 wherein said first arm includes a pawl means for engaging said stopping means, said first arm pivoting laterally towards said stopping means in response to said sudden acceleration whereby said pawl means engages said stopping means causing the latter to stop the rotation of said coil spring thereby stopping the transfer of torque to said blade means.

12. The apparatus according to claim 9 wherein said power source is an electric motor and said power saw includes a manually operable switch mechanism for controlling said motor, the apparatus further comprising a means responsive to said switch mechanism for forcing said first arm away from said stopping means while said motor is off, thereby resetting the detecting means.

13. The apparatus according to claim 10 wherein said magnetic means comprises an insert movably mounted to said housing such that the distance between said insert and said first arm is manually adjustable, and a magnet attached to said insert, whereby the force exerted by said magnet upon said first arm is adjustable.

0072610

14. The apparatus according to claim 1 wherein a planar face on each coil of said coil spring is disposed to contact said first and second surfaces.

15. In a hand-held circular saw of the type including a housing, a motor, and a blade means for sawing a workpiece, the improvement in an integral brake and clutch comprising:

(a) a drive shaft operatively connected to said blade means;

(b) a drive cylinder disposed about said drive shaft and coupled to the motor, said drive shaft having a first annular wall;

(c) a second annular wall defined by said drive cylinder;

(d) a torque transmission element defined by a coil spring having an axis common with the axis of said drive shaft and disposed to engage said first and second annular walls, said coil spring dimensioned to exert a substantial predetermined force against said first and second walls and being arranged such that the force the coil spring exerts on said first and second walls increases when torque is coupled from the drive cylinder to said spring whereby said spring, drive cylinder, and drive shaft rotate in unison; and

(e) means for selectively stopping the rotation of said spring to prevent torque from being coupled from said drive cylinder to said drive shaft, the friction between the stationary spring and the rotating drive shaft operating as a brake to stop the rotation of the blade means.

0072610

16.  The apparatus according to claim 15 further comprising a detecting means carried by said housing for sensing a sudden acceleration of said housing, said detecting means upon sensing said sudden acceleration causing said stopping means to stop the rotation of said coil spring.

0072610

17. In a power driven device of the type including a housing, a power source, and a tool mechanism driven by the power source, the improvement in an integral brake and clutch comprising:

    (a)  a drive shaft operatively connected to said tool mechanism;

    (b)  a drive cylinder mounted adjacent said drive shaft in co-axial relationship therewith and coupled to an output member of said power source;

    (c)  a first cylindrical surface on said drive shaft;

    (d)  a second cylindrical surface on said drive cylinder adjacent said first surface;

    (e)  a torque transmission element defined by a coil spring having an axis common with the axis of said drive shaft and disposed to engage simultaneously said first and second surfaces, said coil spring dimensioned to exert a substantial predetermined force against the first and second surfaces, said coil spring being helically oriented such that the force the latter exerts on said first and second surfaces increases when torque is coupled by the drive cylinder to said spring whereby said spring, drive cylinder, and drive shaft rotate in unison; and

    (f)  means for selectively stopping the rotation of said spring to prevent torque from being coupled from said drive cylinder to said drive shaft, the friction resulting from said predetermined force between the stationary spring and the rotating drive shaft operating as a brake to stop the rotation of the drive shaft.

18. The apparatus according to claim 17 wherein said power driven device is of the hand-held type further comprising a detecting means carried by said housing for sensing a sudden acceleration of said housing in a direction generally away from a workpiece engaged by said tool mechanism, said detecting means, upon sensing said sudden acceleration, causing said stopping means to stop the rotation of said drive shaft.

FIG.1

FIG.2

_FIG_4_

_FIG_3_

_FIG_5_

_FIG_6_